(19) Europäisches Patentamt
European Patent Office
Office européen des brevets

(11) **EP 3 540 695 A1**

(12) **EUROPEAN PATENT APPLICATION**

(43) Date of publication:
**18.09.2019 Bulletin 2019/38**

(51) Int Cl.:
**G06T 11/00** *(2006.01)*     **G06T 11/60** *(2006.01)*

(21) Application number: **18305264.6**

(22) Date of filing: **13.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital CE Patent Holdings 75017 Paris (FR)**

(72) Inventors:
• **PUY, Gilles**
  **35576 Cesson-Sévigné (FR)**
• **PEREZ, Patrick**
  **35576 Cesson-Sévigné (FR)**

(74) Representative: **Huchet, Anne et al InterDigital CE Patent Holdings 20, rue Rouget de Lisle 92130 Issy-les-Moulineaux (FR)**

(54) **METHOD FOR TRANSFER OF A STYLE OF A REFERENCE VISUAL OBJECT TO ANOTHER VISUAL OBJECT, AND CORRESPONDING ELECTRONIC DEVICE, COMPUTER READABLE PROGRAM PRODUCTS AND COMPUTER READABLE STORAGE MEDIUM**

(57)     The disclosure relates to a method comprising:
- obtaining transition parameters of at least one transform of a plurality of successive transforms, the output of a transform being used as the input of the following transform, at least one of the transition parameters encoding style characteristics of at least a part of a first visual object of a plurality of style visual objects;
- modifying the successive transforms by taking account of at least one other parameter derived from a cost function representative of an image intrinsic property;
- obtaining an output image from a part of an input visual object by applying successively the modified transforms, the part of the input visual object being used as the input of the first of the transforms. The disclosure also relates to corresponding electronic device, computer readable program product and computer readable storage medium.

Figure 3

EP 3 540 695 A1

## Description

### 1. Technical field

The present disclosure relates to transfer of a style of at least a part of an exemplar visual object to at least a part of another visual object. For example, a visual object can correspond to an image, a part of an image, a video and/or a part of a video.

A method for transfer of a style of at least a part of an exemplar visual object to at least a part of another visual object, and corresponding electronic device, computer readable program products and computer readable storage medium are described.

### 2. Background art

Style transfer is the task of transforming at least a part of a first visual object (like a first image) in such a way that it resembles the style of at least a part of another visual object (like a second image) used as an example, while preserving the content of the part of the first visual object. This class of computational methods are of special interest in film post-production and graphics, where one could generate different renditions of the same scene under different "style parameters". Here, we see the style of an image (or a part of an image) as a composition of different visual attributes such as color, shading, texture, lines, strokes and regions.

Style transfer is closely related to non-parametric texture synthesis and transfer. Texture transfer can be seen as a special case of texture synthesis, in which example-based texture generation is constrained by the geometry of an original image. Style transfer, for this part, can be considered as a texture transfer, where one searches to transfer style from an example to an original image, and style is essentially modeled as a texture.

Some known style transfer solutions using deep neural networks have led to visually impressive results. For instance, *Gatys et al.* (Gatys L., Ecker A., & Bethge M. "Image style transfer using convolutional neural networks." CVPR 2016) have proposed to perform style transfer by minimization of a loss function built using feature maps obtained from a pre-trained deep neural network. However, while yielding good results, this method is nevertheless slow as the stylized image output by the method is a solution of a long iterative optimization problem.

Furthermore, the above method is not adapted to a transfer of a style of a natural image (or in other word a photography).

Thus, researchers have looked for a solution that will overcome those issues. However, all known methods are either very slow, or not adapted to give a photographic style to an image.

So, there is need for a solution that can help enhancing the user experience of a style transfer application.

### 3. Summary

The present principles enable at least one of the above disadvantages to be resolved by proposing a method comprising:

- obtaining transition parameters of at least one transform of a plurality of successive transforms, the output of a transform being used as the input of the following transform, at least one of said transition parameters encoding style characteristics of at least a part of a first visual object of a plurality of style visual objects;
- modifying said successive transforms by taking account of at least one other parameter derived from a cost function representative of an image intrinsic property;
- obtaining an output image from a part of an input visual object by applying successively said modified transforms, said part of said input visual object being used as the input of the first of said transforms.

At least one embodiment of the present disclosure can propose a solution for transferring a style of at least a part of an example visual object, such as an image, a part of an image, a video or a part of a video, to at least a part of an input visual object, in a way helping to capture a style of the part of the exemplar visual object while helping preserving the structure of the part of the input visual object.

According to another aspect, the present disclosure relates to an electronic device comprising at least one memory and one or several processors configured for collectively transferring the style of a reference visual object to an input visual object.

According to at least one embodiment of the present disclosure, said one or several processors are configured for collectively:

- obtaining transition parameters of at least one transform of a plurality of successive transforms, the output of a transform being used as the input of the following transform, at least one of said transition parameters encoding style characteristics of at least a part of a first visual object of a plurality of style visual objects;
- modifying said successive transforms by taking account of at least one other parameter derived from a cost function representative of an image intrinsic property;
- obtaining an output image from a part of an input visual object by applying successively said modified transforms, said part of said input visual object being used as the input of the first of said transforms.

### 4. List of drawings.

The present disclosure will be better understood, and other specific features and advantages will emerge upon reading the following description, the description referring to the annexed drawings wherein:

- Figure 1 illustrates an input image, a style reference image (or in other word a style exemplar image) and two different resulting output images that can be obtained at run time according to at least one exemplary embodiment of the present disclosure;
- Figure 2 illustrates a global structure of a deep neural network for fast style transfer used in at least one exemplary embodiment of the present disclosure;
- Figure 3 illustrates a structure of one iteration of the deep neural network for fast style transfer according to at least one exemplary embodiment of the present disclosure;
- Figure 4 illustrates a structure of the forward maps of one iteration of the deep neural network for fast style transfer according to at least one exemplary embodiment of the present disclosure;
- Figure 5 is a functional diagram that illustrates an exemplary embodiment of the method of the present disclosure;
- Figure 6 illustrates an electronic device according to at least one exemplary embodiment of the present disclosure;
- Figures 7A to 7D illustrate a structure of the backward maps of one iteration of the deep neural network for fast style transfer according to at least one exemplary embodiment of the present disclosure;
- Figure 8A to 8D illustrate a structure of the backward maps, with a structure preserving filter, of one iteration of the deep neural network for fast style transfer according to at least one exemplary embodiment of the present disclosure.

It is to be noted that the drawings have only an illustration purpose and that the embodiments of the present disclosure are not limited to the illustrated embodiments.

**5. Detailed description of the embodiments.**

At least some principles of the present disclosure propose a new and flexible neural network architecture that can be used to perform fast style transfer.

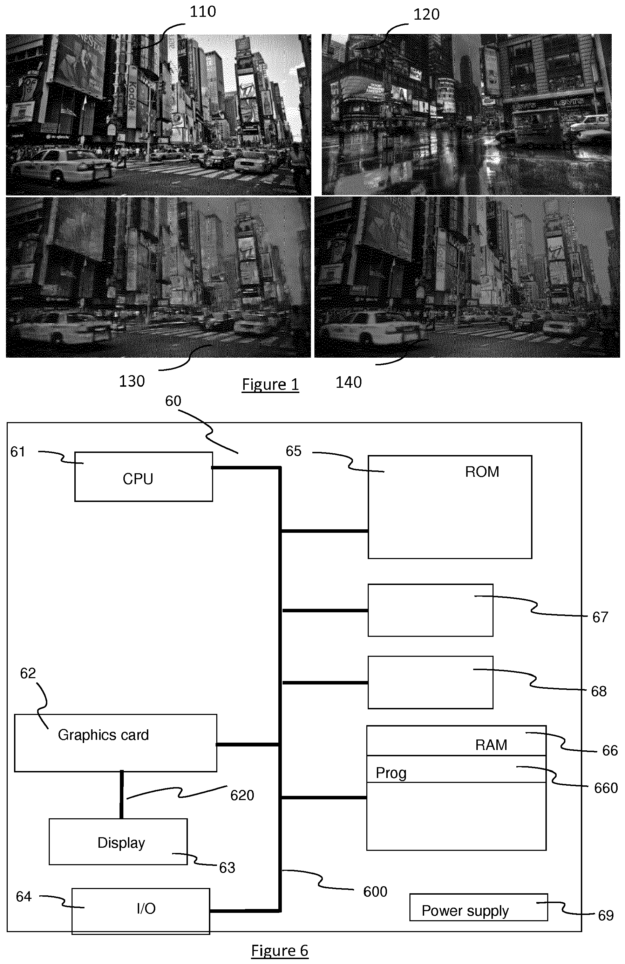

Figure 1 illustrates an exemplary embodiment of the method of the present disclosure.

The style of at least a part of a visual object (like the image 120), used as a style exemplar (or style reference), is transferred to at least a part of an input visual object (like the image 110) in order to get at least an output visual object (like the image 130 or 140) having at least one part with the geometry of the part 110 of the input visual object but with the style of the part 120 of the style visual object. Notably, at least some embodiments of the present disclosure can permit to obtain the style of a visual object having a more or less photorealistic aspect.

Furthermore, in some embodiments of the method of the present disclosure, the look of the intended output can be tailored at run time. For instance, in the exemplary illustration of figure 1, it can be possible to obtain an image that looks more or less like a painting (as the image 130 of figure 1) or like a photography (as the image 140 of figure 1).

The possibility to modify the look of the stylized part of the output visual object at run time can be provided thanks to the flexibility of a deep neural network architecture used according to the present disclosure.

For instance, the architecture can be modified at run time in response to one or more user request(s) to permit a user to obtain a resulting output more adapted to his intent (like achieving some artistic or photorealistic result).

At least some embodiments of the present disclosure provide a fast solution, compatible with some pseudo-real time implementations where the processing time can be considered as acceptable by a user, for instance a processing time of only a few minutes. Thus, it can be possible for a user to iterate several times the style transfer on a same part of an input visual object, with modified architectures, until he gets satisfied by the resulting output. Some embodiments of the present disclosure that comprises a rendering of the stylized part output at each iteration can further gradually guide the user towards an intended result.

Notably, some embodiments can allow to modulate the intensity of the style transfer, or in other word modulate the effect, on the resulting output of the style transfer, of at least one style parameter, and to alter another dynamic of the stylized part of the output visual object.

Figure 6 describes the structure of an electronic device 60 configured notably to perform any of the embodiments of the method of the present disclosure.

The electronic device can be any image and/or video content acquiring device, like a smart phone or a camera. It can also be a device without any video acquiring capabilities but with video processing capabilities.

In the exemplary embodiment of figure 6, the electronic device 60 can include different devices, linked together via a data and address bus 600, which can also carry a timer signal. For instance, it can include a microprocessor 61 (or CPU), a ROM (or « Read Only Memory ») 65, a RAM (or « Random Access Memory ») 66, a power supply 69. According to another variant, the power supply 69 is external to the electronic device 60.

In the exemplary embodiment of figure 6, the electronic device can also comprise at least one Input/Output module 64 (including for instance a keyboard, a mouse, a led, and so on) notably adapted to acquire user request(s). The electronic device 60 can include at least one communication interface configured for the reception and/or transmission of data (notably video data), like a receiving interface adapted to receive a style visual object and/or input visual object (like a video and/or an image content) and/or to receive parameters of the deep neural network used according to the present disclosure. For instance, the electronic device 60 can communicate with a server (for instance a provider of a bank of style visual objects, or a provider of the deep neural network parameters) thanks to its communication interface(s).

The at least one communication interface can comprise at least one communication wireless interface 67 (notably of type WIFI® or Bluetooth®), and/or at least one wired communication interface 68.

This one or more communication interface(s) is optional. Indeed, in some embodiments, the electronic device can process style visual object and/or input visual objects stored in a medium readable by the electronic device and/or acquired by the electronic device.

In some embodiments, the electronic device 60 can also include, or be connected to, a display module 63, for instance a screen. The display can be directly connected to a graphics card 62 by a dedicated bus 620. Such a graphics card may be optional, notably in embodiments where the output of the style transfer is transmitted to another device (for being rendered by a third device for instance). The display module can be used for instance in order to output (either graphically, or textually) information, like an echo or an acknowledgment of a user request, and/or to render at least a part of an input, style and/or output visual object as described hereinafter in connection with the method 500 of the present disclosure.

Each of the mentioned memories can include at least one register, that is to say a memory zone of low capacity (a few binary data) or high capacity (with a capability of storage of an entire audio and/or video file notably).

When the electronic device 60 is powered on, the microprocessor 61 loads the program instructions 660 in a register of the RAM 66, notably the program instruction needed for performing at least one embodiment of the method described herein and executes the program instructions.

According to a variant, the electronic device 60 includes several microprocessors.

In the exemplary embodiment illustrated in figure 6, the microprocessor 61 can be configured for:

- obtaining transition parameters of at least one transform of a plurality of successive transforms, the output of a transform being used as the input of the following transform, at least one of the transition parameters encoding style characteristics of at least a part of a first visual object of a plurality of style visual objects;
- modifying the successive transforms by taking account of at least one other parameter derived from a cost function representative of an image intrinsic property;
- obtaining an output image from a part of an input visual object by applying successively the modified transforms, the part of the input visual object being used as the input of the first of the transforms.

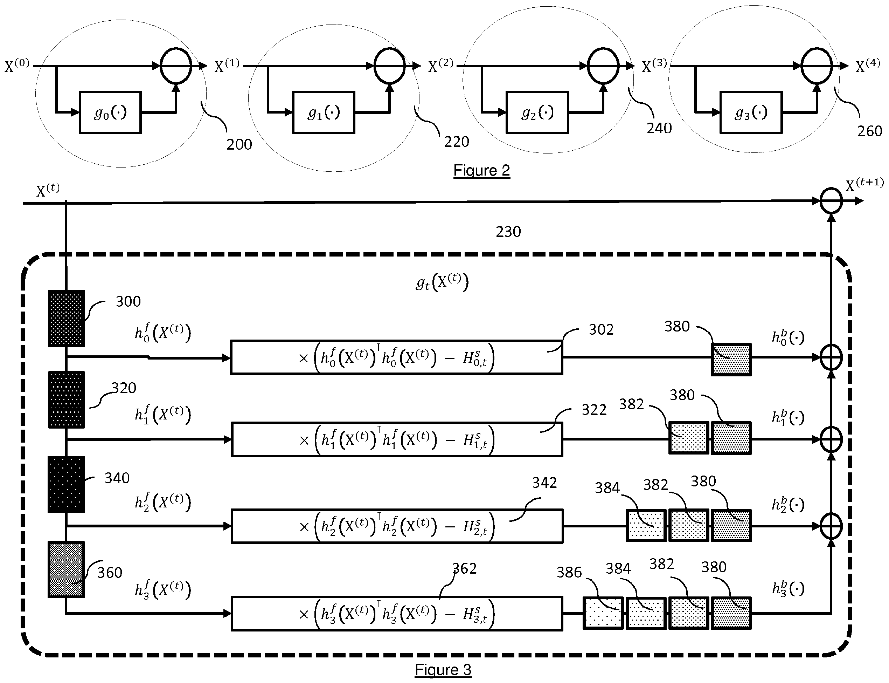

Figure 2 illustrates a global structure (or architecture) of a deep neural network for fast style transfer used in at least one exemplary embodiment of the present disclosure.

In the detailed embodiment, the network can comprise a stack of N sub-networks (with N being a strictly positive integer). For instance, the network can comprise less than 10 sub-networks (like 4 sub-networks 200, 220, 240, 260 as illustrated by Figure 2).

At least some of the sub-networks can have identical structures. For instance, in the exemplary embodiment of figures 2, 3, 4, 7A to 7D, all the sub-networks 200, 220, 240, 260 of figure 2 have identical structures (detailed in figures 3, 4 and 7A to 7D).

Each sub-network $t$ (with $t$ in the range [1; N]) transforms, at pixel levels, the image $X^{(t)}$ of a visual object into a new image $X^{(t+1)}$ through one step of learned gradient given with the below formula:

$$X^{(t+1)} = X^{(t)} - g_t\left(X^{(t)}\right)$$

With $g_t(.)$ being a learned gradient of the sub-network $t$.

Indeed, as it will be explained later, the gradient $g_t(.)$ of each sub-network is learned prior to the transfer of a style to at least a part of an input visual object.

With this notation, $X^{(t)}$ is thus the input of the sub-network $t$ and $X^{(t+1)}$ is the output of the sub-network $t$ and also, except for last sub-network (in other words, with the above notation, the sub-network $N$), the input of the sub-network $(t+1)$;

The structure of a sub-network $t$ is presented hereinafter in connection with figures 3, 4 and 7A to 7D.

Figure 3 illustrates the overall structure of a sub-network, and the details of the gradient $g_t(.)$ when applied to the image $X^{(t)}$. As shown by figure 3, the image $X^{(t)}$ is processed by several forward maps $h_0^f(.)$, $h_1^f(.)$, $h_2^f(.)$, $h_3^f(.)$ of different levels (or in other words scales) to obtain feature maps. A pseudo gradient 302, 322, 342, 362 is then applied to the output of each forward map. At least one backward map $h_0^b(.)$, $h_1^b(.)$, $h_2^b(.)$, $h_3^b(.)$ is used for processing each output of the pseudo gradients 302, 322, 342, 362. The output of the backward maps can be recombined (for instance summed) and subtracted from the image $X^{(t)}$ for obtaining an output image $X^{(t+1)}$.

The forward map $h_0^f(.)$ is modelled by ele-

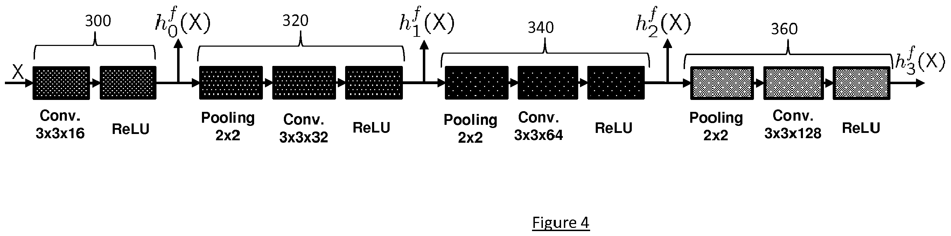

ment 300 in Figure 4. The forward map $h_0^f(.)$ takes as input the image $X$ and output $h_0^f(X)$ after the going through reference 300. The forward map $h_1^f(.)$ is modelled by the composition of elements 300 and 320 in Figure 4: it takes as input the image $X$ and output $h_1^f(X)$ after the going successively through element 300 and element 320. Similarly, the forward map $h_2^f(.)$ is modelled by the composition of 300, 320 and 340 and the forward map $h_3^f(.)$ is modelled by the composition of 300, 320, 340 and 360.

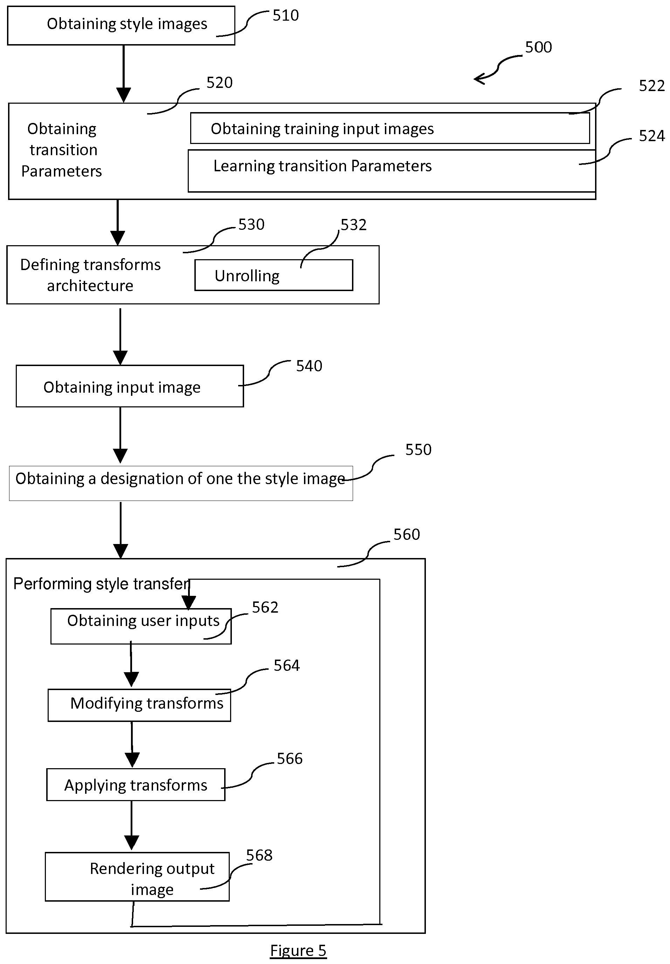

The backward map $h_0^b(.)$ is modelled by element 380 in Figure 5. The backward map $h_1^b(.)$ is modelled by the composition of element 382 and element 380 in Figure 5: the input of the backward map $h_1^b(.)$ goes successively through element 382 and element 380. Similarly, the backward map $h_2^b(.)$ is modelled by the composition of element 384, element 382 and element 380: the input of this map goes successively through element 384 first, element 382, and element 380. Finally, the backward map $h_3^b(.)$ is modelled similarly by the composition of element 386, element 384, element 382 and element 380.

The spatial dimension of the feature maps output by the forward and backward maps vary during the processing. Notably, according to figure 3, the spatial dimension of the feature maps decreases from element 300 to element 320, from element 320 to element 340, and from element 340 to element 360. The spatial dimension of the feature maps stays constant between element 300 and element 380, between element 320 and element 382, between element 340 and element 384, and between element 360 and element 386. The spatial dimension of the feature maps increases from element 386 to element 384, from element 384 to element 382, and from element 382 to element 380.

The matrix $H_{i,t}^s$, $i = 0,\cdots,3$, $t = 0,\cdots,3$, used by the pseudo gradient 302, 322, 342, 362 of each level, encodes the style of at least a part of an exemplar visual object s.

In the exemplary embodiment illustrated, each sub-network has the same structure, and the forward and backward maps are the same for each sub-network t = 0,···,3. However, the matrixes $H_{i,t}^s$, $i = 0,\cdots,3$, $t = 0,\cdots,$, 3 can be different between the sub-networks. Of course, in other embodiments where the structure of at least some of the sub-networks can be different, the forward and backward maps can differ upon iterations.

As it will be explained with more details later, in the exemplary embodiment of figure 3, all the parameters, or in other terms the "filters", of each gradient $g_t(.)$ are learned during a learning phase. The learned parameters include notably all filters of the forward and backward maps, as well as the matrixes $H_{i,t}^s$, $i = 0,\cdots,3$, $t = 0,\cdots,$ 3 for each style exemplar visual object s. Those parameters are called hereinafter "gradients parameters" or "transition parameters".

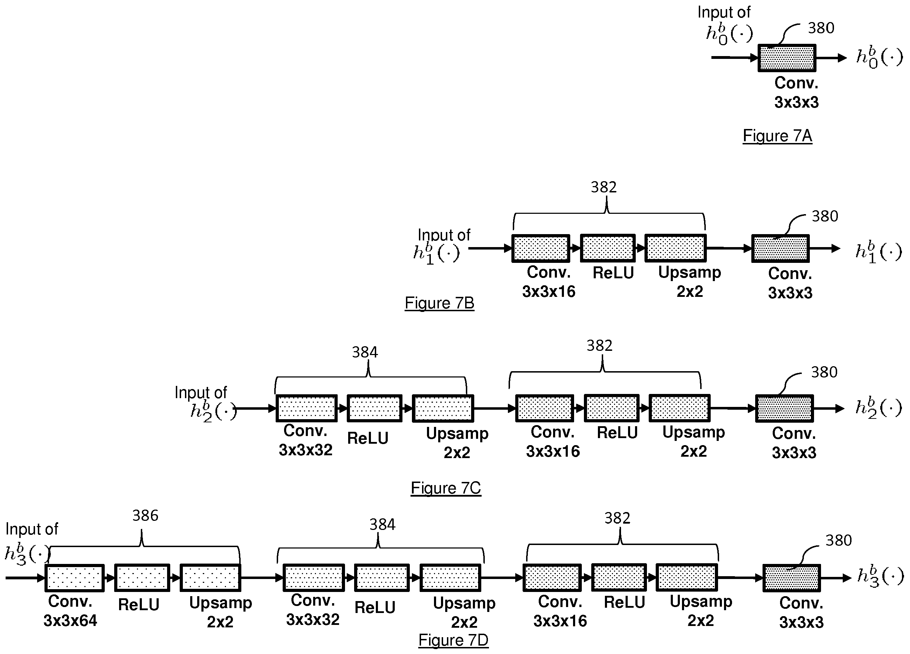

Figures 4 and figures 7A to 7D illustrate respectively more precisely the structure of the forward maps and the backward maps (and of the corresponding elements 300, 320, 340, 360, 380, 382, 384, 386 of the sub-networks, which can be combined as explained above for obtaining the forward maps and the backward maps).

Notably, figure 4 shows the different stages (or in other terms "sub-levels") of each forward map. Each element 300, 320, 340 and 360 can comprise at least one convolutional stage, at least one Rectified Linear Unit (ReLU) stage where a non-linear function is applied, and (except for element 300 that corresponds to the first forward map $h_0^f(.)$ at least one pooling stage. As shown in figure 4, in element 300, all color channels of the image $X^{(t)}$ are input to a convolutional stage (where a convolution is applied by at least one filter, resulting in feature maps), followed by a ReLU stage where all feature maps having a negative value are forced to zero. The output of element 300 (or in other terms the output of the forward map $h_0^f(.)$ is then used as the input of a pooling stage of the following element 320, the output of the following element 320 constituting the output of the following forward map $h_1^b(.)$. Then the processing continues as shown by figure 4. The output of the current forward map $h_1^b(.)$, $h_2^f(.)$ being used as the input of a pooling stage of the following element 340, 360, which output constitutes the output of the following forward map $h_2^f(.)$, $h_3^f(.)$.

The output of each forward map $h_0^f(.)$, $h_1^b(.)$, $h_2^f(.)$, $h_3^f(.)$. (or in other words the output of elements 300, 320, 340, 360) is used by the pseudo gradient of the corresponding level, while being further used, as explained above, as the input of the following forward map (or in other words the forward map of the next level) except of course for the last forward map, $h_3^f(.)$. In the exemplary embodiment of figure 4, each convolutional stage increases the number of feature maps while each pooling stage decreases the spatial dimension of the feature maps. For instance, each convolutional stage can multiply per 2 the number of feature maps while each pooling stage can divide per 2 the spatial dimension of the feature maps. In the exemplary embodiment of figure 4, a filter can have a 3x3 spatial dimension per channel. 16 filters are used in the convolutional stage of the first (or "level 0") forward map 300, 32 filters are used in the convolutional stage of the "level 1" forward map 320, 64 filters are used in the convolutional stage of the "level 2" forward map 340 and 128 filters are used in the convolutional stage of the "level 3" forward map 360.

Similarly, figures 7A to 7D show the structure of the backward maps map $h_0^b(.)$, $h_1^b(.)$, $h_2^b(.)$, $h_3^b(.)$ and corresponding elements 380, 382, 384, and 386. Each element 382, 384, 386, other than the last element 380 comprises a convolutional stage, a ReLU stage, and an up-sampling stage (noted as "Upsamp" in the figures). The last element 380 only comprises a convolutional stage. During the up-sampling stage, a linear interpolation function is applied to at least some of the feature maps to increase the spatial dimension of the feature maps. The structure of the backward maps is symmetrical to the structure of the forward maps. In the exemplary embodiment of figure 4, each convolutional stage divides per 2 the number of feature maps while each up-sampling stage multiplies per 2 the spatial dimension of the feature map. The number of elements 386, 384, 382, and 380 successively applied is function of the considered level, the output of an element 386, 384, 382 being used as the input of the next applied element 384, 382, and 380 (if any) for a same level. More precisely, in the exemplary embodiment illustrated, the output of the "level 0" pseudo gradient is directly processed by element 380 (which constitutes the backward map 380). Two elements 382, 380 are successively applied for the output of the "level 1" pseudo gradient, while three elements 384, 382, 380 are successively applied for the output of the "level 2" pseudo gradient and four elements 386, 384, 382, 380 are successively applied for the output of the "level 3" pseudo gradient.

In the embodiment of figures 7A to 7D, the image $X^{(t+1)}$ can then be obtained by the difference between the image $X^{(t)}$ and the combination of the outputs of all the backward maps. The combination can correspond to an addition or, more generally, to a linear combination. The image $X^{(t+1)}$ is then used as the input of the next sub-network $t+1$.

Figure 5 illustrates an exemplary embodiment of the method 500 of the present disclosure.

In the illustrated embodiment, the method comprises obtaining 510 at least a part of at least one visual object (called hereinafter "style visual object") whose style is to be used later as an exemplar (or reference style) for performing a style transfer on at least a part of some input visual object. The style visual object can be an image (for instance a still image or an image being part of a video) or can be a part of such an image.

As illustrated by figure 5, the method 500 can comprise obtaining 520 values of the parameters of the learned gradients $g_t(.)$ of the sub-networks.

In some embodiments, the obtaining 520 can comprise learning 524 at least some of the gradients parameters (or transition parameters). Notably, as illustrated by figure 5, the method can also comprise obtaining data needed for the learning and notably obtaining 522 at least a part of at least one training input visual object. In the exemplary embodiment described, during the learning 524, at least some of the obtained parts of training visual objects and at least some of the obtained parts of style visual objects are used for performing style transfers, each style transfer having as input one image, or image part, of an obtained training input visual object, and outputting an image, or image part, having the style of at least one image, or at least one image part, of an obtained style visual object, while preserving the content of the part of the training input visual object.

The learning can notably involve unrolling 532 (or in other terms "unfolding") the sub-networks from a gradient descent algorithm. In the exemplary embodiment illustrated, the style transfer during the learning can notably be performed (as taught by Gatys et al. for instance), by solving a style transfer problem, based on a minimization of a loss function built using feature maps of the image, or image part, of the training input visual object and style visual object, used respectively as input and style examples, the feature maps being obtained from a pre-trained deep neural network.

The parameters of the learned gradient are then obtained by stochastic gradient descent using the above loss function. Thus, while the gradient used in the above loss function relates to an input image, the stochastic gradients relate to the parameters of the learned gradients (and thus of the sub-networks). The learned gradients replace the gradients in the original descent algorithm for minimization of the above loss function and, is learned so as to solve the style transfer problem in a small number of iterations. While in some embodiments the gradients parameters can be learned (as explained above), in other embodiments, at least some of the learned gradients parameters can be obtained from a storage medium (like a removable storage medium) and/or from a communication interface. This can be the case for instance when at least some of the gradients parameters have been learned previously, in the electronic device where the method 500 is implemented or in a remote device. Indeed, in some embodiments, the learning phase can be very long and thus can be performed prior to the execution of an application implementing the method of the present disclosure. Furthermore, it can be performed in a device having greater capabilities (in terms on memory and processing notably) than the electronic device where the application is executing.

It is to be pointed out that in a variant, some of the gradient parameters can be learned while some other gradients parameters can be obtained from a storage medium designated by means of a user interface for instance.

The method can further comprise using the obtained gradients parameters (or transition parameters) for defining 530 the stack of sub-networks and the corresponding transforms.

As illustrated by figure 5, the method can comprise obtaining 540 an input visual object on which the style transfer is to be performed and obtaining 550 a designation of at least one of the style visual objects used for the learning. It is to be pointed out that the gradients parameters are tailored during the learning according to the style visual objects used for the learning. Thus, the defined stack of sub-networks used at run time for the style transfer is also only adapted to transfer (to an input visual object) the style of one the style visual objects used during the learning.

In some embodiments, the obtaining 550 of a designation can comprise rendering at least one image, or image part, of at least one of the obtained style visual objects on a user interface of the electronic device 60 and acquiring the designation from the user interface.

In some embodiments, the method can comprise performing 560 a style transfer on the obtained input image, by using the matrix $H^s$ corresponding to the designated part of the obtained style visual object $s$ and the learned gradient parameters for the stack of sub-networks. In other embodiments, the network can be modified by taking into account at least one other parameter, before applying the style transfer. Indeed, in the illustrated embodiment, at least one parameter of the style transfer can be tailored at run time via the user interface.

Notably, to achieve more or less photorealistic results (as illustrated by output image 130 and 140 of figure 1), the network can be modified at runtime as follows:

$$X^{(t+1)} = X^{(t)} - g_t\big(X^{(t)}\big) * i(L),$$

where $g_t(X^{(t)})*i(L)$ denotes the filtering of the gradient $g_t(X^{(t)})$ with the structure preserving filter $i(L)$.

The matrix $L$ can be a matrix like the one known as "the matting Laplacian" described by Levin, Lischinski & Weiss (A Closed-Form Solution to Natural Image Matting, IEEE PAMI, vol. 30(2), pp. 228-242, 2008), and $i(.)$ can be a function having as argument the matrix $L$, like a polynomial function:

$$i(L) = \sum_{j=1}^{m} \alpha_j L^j.$$

Alternatively, the learned gradient $g_t(.)$ can be

modified as follows:

$$X^{(t+1)} = X^{(t)} - (I + \gamma L)^{-1} g_t\big(X^{(t)}\big),$$

or:

$$X^{(t+1)} = (I + \gamma L)^{-1}\big(X^{(t)} - g_t\big(X^{(t)}\big)\big)$$

where $I$ is the identity matrix and $\gamma > 0$ is a tunable parameter.

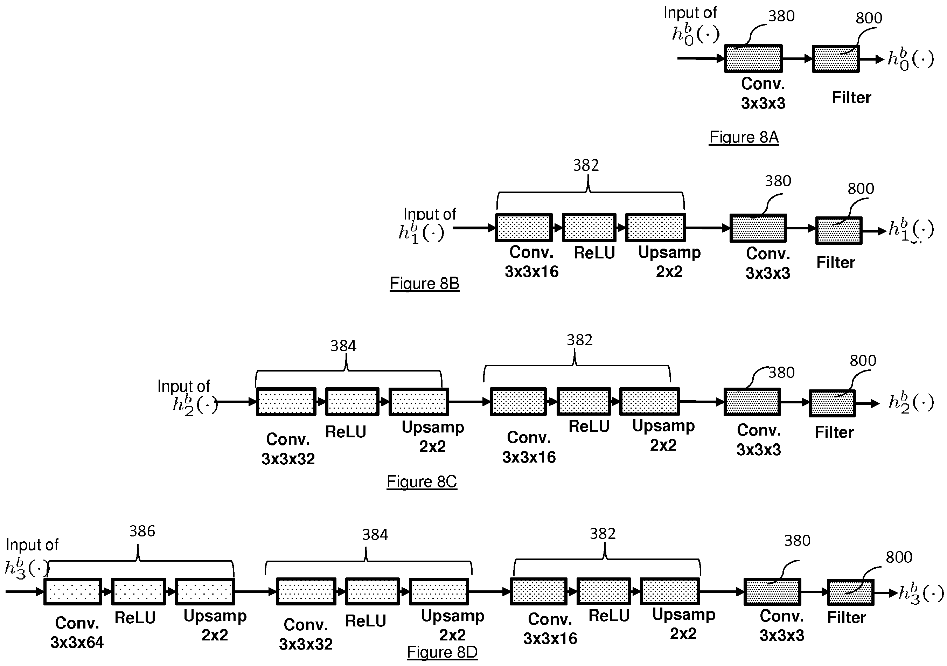

In some embodiments, the filter $i(L)$ can be applied on the combination of the outputs of the backward maps. Alternatively, the filter can be included in at least one of the backward and/or forward maps of at least one of the levels. Of course, many variants can be considered for including the filter in one or more backward and/or forward map(s). For instance, the filter can be applied after a convolution layer. Figures 8A to 8D illustrate another example including, for each level, a filter 800 after the last element 380 of each backward map. According to still another example, filter can be included after each convolution layer of each forward and backward map.

In a more general way, the gradients can be modified for altering some intrinsic property in the output image. The intrinsic property can be a property that has not been used by an optimization function used for obtaining the sub-networks 200, 220, 240, 260 while being however derivable from an optimization function. Such an intrinsic property can be a pixel dynamic of at least a part of one or more reference visual object(s), like the part of the input visual object on which the style transfer applied, the designated style reference image and/or a third image (like another part of one of the obtained style visual object, or an image designated via the user interface).

The pixel dynamic can be a limitation of the possible range(s) of values of pixels in the output of the style transfer. For instance, the pixel dynamic can impact a photorealistic effect of the output of the style transfer (that can be made more or less photorealistic by modifying the gradients), as illustrated by figure 1. The pixel dynamic can also impact the possible colors of a pixel of at least a part of in the output visual object. For instance, the part of the output visual object can comprise only a limited set of colors, (like only grey levels) compared to the part of the input visual object). The pixel dynamic can also impact a preserving, inside the part of the output visual object, of the local contrasts inside the part of the input visual object.

The at least one other parameter can be obtained thanks to a cost function representative of the image intrinsic property. For instance, it can be obtained by minimizing a cost function. This cost function can be selected, amongst several cost functions, thanks to the user interface. For instance, a sentence can be output on a user interface in order to obtain, in response, a choice of a user between several proposals. The response obtained from the user interface can permit to determine the cost function to use. For instance, when performing a style transfer on an input image, a question like "Do you want a more photorealistic rendering of the output image? (For "Yes", press button A, for "No" press button B") can be output. Depending on the pressed button, the cost function selected can differ, thus permitting to output a more or less photorealistic image.

It is to be pointed out that with a cost function being always null will result in the obtaining of an "identify'" filter, not altering the transition parameters.

Furthermore, at least some embodiments of the present disclosure can permit to vary the style transfer intensity. In other word, it can be possible to modulate the impact on the style of the part of the reference visual object on the part of the output visual object.

For instance, in some embodiments, the intensity of the style transfer can be controlled at runtime (notably via a user interface) by multiplying the gradient $g_t(X^{(t)})$ by a parameter $\beta$.

$$X^{(t+1)} = X^{(t)} - \beta \, g_t\left(X^{(t)}\right)$$

With $\beta$ being a real number with a positive value.

Of course, the parameter $\beta$ can be defined differently. For instance, the parameter $\beta$ can be defined as a vector $\beta(\beta_i)$.

Notably, if the gradient $g_t(X^{(t)})$ is noted as $g_t(.) = \sum_{i=0}^{3} h_i^b(.)$ (where each $h_i^b(.)$ represents the output of a scale (or level) of the gradient, the gradient can be modified as $g_t(.) = \sum_{i=0}^{3} \beta_i h_i^b(.)$, in order to weight differently the effect of the style features for at least one scale in the final result.

In such embodiments, where the gradient of at least one of the sub-networks can be modified at run time (by weighing at least one parameter relating to a dynamic and/or a style transfer intensity for instance), the method can comprise obtaining 562 at least one user input and modifying the gradient consequently and thus modifying 564 the transforms, as explained above. For instance, a user input relating to a variation of a photorealistic effect, or a weighting of one or more scales (or levels) can be obtained.

As illustrated by figure 5, the method can comprise 566 applying the modified transforms with the modified gradients to at least a part of the input visual object. The method can comprise rendering 568, at least partially, at least one output visual object comprising at least one image, or image part, being the output of the style transfer applied to the at least one image, or image part, of the input visual object. Depending upon embodiments, the rendering 568 can comprise a rendering of the part (on which the style transfer is applied) of input visual object, a rendering of the part of the style visual object used as a reference style, and/or a rendering of the stylized image or image part. The rendering can comprise displaying at least one of the above information on a display on the device where the method of the present disclosure is performed, or printing at least one of the above information, and/or storing at least one of the above information on a specific support. This rendering is optional.

A variant of the style transfer method detailed above is presented hereinafter. Sometimes one can wish to take into account just a part of an image during the style transformation, e.g., to match parts of an input image and one of the style reference image(s) that have the same semantic (sky to sky, buildings to buildings, roads to roads, etc.). This matching can be achieved by using a mask, that can be represented by a diagonal matrix $M$, that identifies a part of the image. Typically, the mask contains first values ("1" for instance) on the region of interest and second values (like null values) everywhere else.

In such an embodiment, the filters that adjust the style in the network, i.e.,

$$h_i^f\left(X^{(t)}\right)^T h_i^f\left(X^{(t)}\right) - H_{i,t}^s$$

(with link to Figure 3), can be modified as follows with the mask:

$$\frac{1}{Tr(M_i)}\left(M_i h_i^f\left(X^{(t)}\right)\right)^T \left(M_i h_i^f\left(X^{(t)}\right)\right) - H_{i,t}^s,$$

where $Tr(M_i)$ is the trace of matrix $M_i$, i.e., the sum of its diagonal entries.

Such an embodiment can permit to take into account only the region of interest of the input image to adjust the style, instead of taking into account the full input image. as in some other embodiments described earlier,

The matrix $M_i$ is the matrix $M$ that is adapted to the spatial resolution of the feature maps at the $i^{th}$ level (for example by down-sampling the content image $X^{(0)}$ at the spatial resolution of $i^{th}$ level and finding the region of interest in this down-sampled image to create the mask $M_i$).

It is to be pointed out that, even if the above modification only affects the filters that adjust the style of the image output by the stack of sub-networks (herein the final image $X^{(4)}$, with link with figure 3), this output image is still entirely transformed. If one wants to keep the stylization only on the region of interest, one can use the mask $M$ to extract that part in $X^{(4)}$, and replace the region not identified in the mask with the corresponding region in $X^{(0)}$ (or of the corresponding region of yet another transformed version of $X^{(0)}$). In some embodiments, several masks can be used in combination. They can relate to different style reference images, in order for several parts of an input image to be transformed according to the style of several style reference images.

The disclosure notably relates to a method comprising:

- obtaining transition parameters of at least one transform of a plurality of successive transforms, the output of a transform being used as the input of the following transform, at least one of the transition parameters encoding style characteristics of at least a part of a first visual object of a plurality of style visual objects;
- modifying the successive transforms by taking account of at least one other parameter derived from a cost function representative of an image intrinsic property;
- obtaining an output image from a part of an input visual object by applying successively the modified transforms, the part of the input visual object being used as the input of the first of the transforms.

The disclosure also relates to an electronic device comprising at least one memory and one or several processors configured for collectively:

- obtaining transition parameters of at least one transform of a plurality of successive transforms, the output of a transform being used as the input of the following transform, at least one of the transition parameters encoding style characteristics of at least a part of a first visual object of a plurality of style visual objects;
- modifying the successive transforms by taking account of at least one other parameter derived from a cost function representative of an image intrinsic property;
- obtaining an output image from a part of an input visual object by applying successively the modified transforms, the part of the input visual object being used as the input of the first of the transforms.

According to another aspect, the present disclosure relates to an electronic device comprising at least one memory and at least one processing circuitry configured for:

- obtaining transition parameters of at least one transform of a plurality of successive transforms, the output of a transform being used as the input of the following transform, at least one of the transition parameters encoding style characteristics of at least a part of a first visual object of a plurality of style visual objects;
- modifying the successive transforms by taking account of at least one other parameter derived from a cost function representative of an image intrinsic property;
- obtaining an output image from a part of an input visual object by applying successively the modified transforms, the part of the input visual object being used as the input of the first of the transforms.

According to at least one embodiment of the present disclosure, each of successive transform is a sub-network of a deep neural network.

According to at least one embodiment of the present disclosure, the cost function is selectable from a user interface.

According to at least one embodiment of the present disclosure, obtaining transition parameters comprises learning the transition parameters by minimizing a training loss function from feature maps of at least one training pair of images, each training pair comprising a training input visual object and one of the style visual objects.

According to at least one embodiment of the present disclosure, the architecture of the successive transforms is obtained by unrolling a gradient descent algorithm.

According to at least one embodiment of the present disclosure, the feature maps are computed by using a pre-trained deep neural network.

According to at least one embodiment of the present disclosure, the modifying is performed at run time.

According to at least one embodiment of the present disclosure, the modifying is performed in response to a first user request.

According to at least one embodiment of the present disclosure, the at least one other parameter is weighted according to the first user request.

According to at least one embodiment of the present disclosure, the intrinsic property is a dynamic of a reference visual object.

According to at least one embodiment of the present disclosure, the intrinsic property relates to at least one of:

- a photorealistic rendering;
- a painting rendering;
- a rendering by a limited set of colors; and/or
- a preserving of local contrasts inside at least a part of the input visual object.

According to at least one embodiment of the present disclosure, the method comprises weighting parameters of at least one of the transforms.

According to at least one embodiment of the present disclosure, the weighting is performed at run time.

According to at least one embodiment of the present disclosure, the weighting is performed in response to a second user request.

While not explicitly described, the electronic device of the present disclosure can be adapted to perform the method of the present disclosure in any of its embodiments.

According to another aspect, the present disclosure relates to a communication system comprising an electronic device of the present disclosure in any of its embodiments.

While not explicitly described, the present embodiments related to a method or to the corresponding electronic device or system can be employed in any combination or subcombination.

According to another aspect, the present disclosure relates to a non-transitory program storage device, readable by a computer.

According to an embodiment of the present disclosure, the non-transitory computer readable program storage device tangibly embodies a program of instructions executable by a computer to perform the method of the present disclosure in any of its embodiments.

According to another aspect, the present disclosure relates to a non-transitory program storage product, readable by a computer.

According to an embodiment of the present disclosure, the non-transitory computer readable program product tangibly embodies program code instructions for performing, when the non-transitory software program is executed by a computer, the method of the present disclosure in any of its embodiments.

Notably, at least one embodiment of the present disclosure relates to a non-transitory computer readable program product comprising program code instructions for performing, when the non-transitory software program is executed by a computer, a method comprising:

- obtaining transition parameters of at least one transform of a plurality of successive transforms, the output of a transform being used as the input of the following transform, at least one of the transition parameters encoding style characteristics of at least a part of a first visual object of a plurality of style visual objects;
- modifying the successive transforms by taking account of at least one other parameter derived from a cost function representative of an image intrinsic property;
- obtaining an output image from a part of an input visual object by applying successively the modified transforms, the part of the input visual object being used as the input of the first of the transforms.

According to another aspect, the present disclosure relates to a computer readable storage medium carrying a software program comprising program code instructions for performing the method of the present disclosure, in any of its embodiments, when the software program is executed by a computer.

According to an embodiment of the present disclosure, the computer readable storage medium tangibly embodies a program of instructions executable by a computer for performing, when the non-transitory software program is executed by a computer, a method comprising:

- obtaining transition parameters of at least one transform of a plurality of successive transforms, the output of a transform being used as the input of the following transform, at least one of the transition parameters encoding style characteristics of at least a part of a first visual object of a plurality of style visual objects;
- modifying the successive transforms by taking account of at least one other parameter derived from a cost function representative of an image intrinsic property;
- obtaining an output image from a part of an input visual object by applying successively the modified transforms, the part of the input visual object being used as the input of the first of the transforms.

According to an embodiment of the present disclosure, the computer readable storage medium carries a software program comprising program code instructions, when the non-transitory software program is executed by a computer, a method comprising:

- obtaining transition parameters of at least one transform of a plurality of successive transforms, the output of a transform being used as the input of the following transform, at least one of the transition parameters encoding style characteristics of at least a part of a first visual object of a plurality of style visual objects;
- modifying the successive transforms by taking account of at least one other parameter derived from a cost function representative of an image intrinsic property;
- obtaining an output image from a part of an input visual object by applying successively the modified transforms, the part of the input visual object being used as the input of the first of the transforms.

As will be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EEPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present principles. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

Although the illustrative embodiments have been described herein with reference to the accompanying drawings, it is to be understood that the present principles are not limited to those precise embodiments, and that various changes and modifications may be done therein by one of ordinary skill in the pertinent art without departing from the scope of the present principles. All such changes and modifications are intended to be included within the scope of the present principles as set forth in the appended claims.

At least some embodiment of the style transfer method of the present disclosure, can be applied in a consumer context, for instance for providing a new tool for image editing, more powerful than just color transfer, and more powerful than tools like Instagram® where image filters are defined once and for all.

At least some embodiment of the style transfer method of the present disclosure, can be applied in a (semi)-professional context, for instance for providing a tool to be used to perform image manipulation and editing in an interactive manner, like for pre-editing or pre-grading before a manual intervention.

**Claims**

1. A method comprising:

   - obtaining transition parameters of at least one transform of a plurality of successive transforms, the output of a transform being used as the input of the following transform, at least one of said transition parameters encoding style characteristics of at least a part of a first visual object of a plurality of style visual objects;
   - modifying said successive transforms by taking account of at least one other parameter derived from a cost function representative of an image intrinsic property;
   - obtaining an output image from a part of an input visual object by applying successively said modified transforms, said part of said input visual object being used as the input of the first of said transforms.

2. An electronic device comprising at least one memory and one or several processors configured for collectively:

   - obtaining transition parameters of at least one transform of a plurality of successive transforms, the output of a transform being used as the input of the following transform, at least one of said transition parameters encoding style characteristics of at least a part of a first visual object of a plurality of style visual objects;
   - modifying said successive transforms by taking account of at least one other parameter derived from a cost function representative of an image intrinsic property;
   - obtaining an output image from a part of an input visual object by applying successively said modified transforms, said part of said input visual object being used as the input of the first of said transforms.

3. The method of claim 1 or the electronic device of claim 2 wherein each of successive transform is a sub-network of a deep neural network.

4. The method of claim 1 or 3, or the electronic device of claim 2 or 3 wherein obtaining transition parameters comprises learning said transition parameters by minimizing a training loss function from feature maps of at least one training pair of images, each training pair comprising a training input visual object and one of said style visual objects.

5. The method of claim 3 or 4, or the electronic device of claims 3 or 4, wherein said feature maps are computed by using a pre-trained deep neural network.

**6.** The method of claim 1 or of any of claims 3 to 5, or the electronic device of any of claims 2 to 5, wherein said modifying is performed at run time.

**7.** The method of claim 1 or of any of claims 3 to 6, or the electronic device of any of claims 2 to 6, wherein said modifying is performed in response to a first user request.

**8.** The method of claim 7, or the electronic device of claim 7, wherein said at least one other parameter is weighted according to said first user request.

**9.** The method of claim 1 or of any of claims 3 to 8, or the electronic device of any of claims 2 to 8, wherein said intrinsic property is a dynamic of a reference visual object.

**10.** The method of claim 1 or of any of claims 3 to 9, or the electronic device of any of claims 2 to 9, wherein said intrinsic property relates to at least one of:

- a photorealistic rendering;
- a painting rendering;
- a rendering by a limited set of colors; and/or
- a preserving of local contrasts inside at least a part of said input visual object.

**11.** The method of claim 1 or of any of claims 3 to 10, or the device of any of claims 2 to 10, comprising weighting parameters of at least one of said transforms.

**12.** The method of claim 1 or of any of claims 3 to 11, or the device of any of claims 2 to 11, wherein said weighting is performed at run time.

**13.** The method of claim 1 or of any of claims 3 to 12, or the device of any of claims 2 to 12, wherein said weighting is performed in response to a second user request.

**14.** A non-transitory computer readable program product, comprising program code instructions for performing, when said non-transitory software program is executed by a computer, a method comprising:

- obtaining transition parameters of at least one transform of a plurality of successive transforms, the output of a transform being used as the input of the following transform, at least one of said transition parameters encoding style characteristics of at least a part of a first visual object of a plurality of style visual objects;
- modifying said successive transforms by taking account of at least one other parameter derived from a cost function representative of an image intrinsic property;

- obtaining an output image from a part of an input visual object by applying successively said modified transforms, said part of said input visual object being used as the input of the first of said transforms.

**15.** Computer readable storage medium carrying a software program **characterized in that** it comprises program code instructions for performing, when said non-transitory software program is executed by a computer, a method comprising:

- obtaining transition parameters of at least one transform of a plurality of successive transforms, the output of a transform being used as the input of the following transform, at least one of said transition parameters encoding style characteristics of at least a part of a first visual object of a plurality of style visual objects;
- modifying said successive transforms by taking account of at least one other parameter derived from a cost function representative of an image intrinsic property;
- obtaining an output image from a part of an input visual object by applying successively said modified transforms, said part of said input visual object being used as the input of the first of said transforms.

110

120

130          Figure 1          140

60

61          CPU          65          ROM

62

Graphics card

67

68

RAM          66

Prog          660

620

Display          63

64          I/O          600

Power supply          69

Figure 6

$X^{(0)}$ $g_0(\cdot)$ $X^{(1)}$ $g_1(\cdot)$ $X^{(2)}$ $g_2(\cdot)$ $X^{(3)}$ $g_3(\cdot)$ $X^{(4)}$

200    220    240    260

Figure 2

$X^{(t)}$      $X^{(t+1)}$

230

$g_t\left(X^{(t)}\right)$

300

$h_0^f\left(X^{(t)}\right)$

302    380    $h_0^b(\cdot)$

$\times\left(h_0^f\left(X^{(t)}\right)^\top h_0^f\left(X^{(t)}\right) - H_{0,t}^s\right)$

320

$h_1^f\left(X^{(t)}\right)$

322   382    380    $h_1^b(\cdot)$

$\times\left(h_1^f\left(X^{(t)}\right)^\top h_1^f\left(X^{(t)}\right) - H_{1,t}^s\right)$

340

$h_2^f\left(X^{(t)}\right)$

342   384   382   380    $h_2^b(\cdot)$

$\times\left(h_2^f\left(X^{(t)}\right)^\top h_2^f\left(X^{(t)}\right) - H_{2,t}^s\right)$

360

$h_3^f\left(X^{(t)}\right)$

362   386   384   382   380    $h_3^b(\cdot)$

$\times\left(h_3^f\left(X^{(t)}\right)^\top h_3^f\left(X^{(t)}\right) - H_{3,t}^s\right)$

Figure 3

$$300 \qquad h_0^f(X) \qquad 320 \qquad h_1^f(X) \qquad 340 \qquad h_2^f(X) \qquad 360 \qquad h_3^f(X)$$

X

| Conv. 3x3x16 | ReLU | Pooling 2x2 | Conv. 3x3x32 | ReLU | Pooling 2x2 | Conv. 3x3x64 | ReLU | Pooling 2x2 | Conv. 3x3x128 | ReLU |

Figure 4

Obtaining style images — 510

Obtaining transition Parameters — 520

Obtaining training input images — 522

Learning transition Parameters — 524

Defining transforms architecture — 530

Unrolling — 532

Obtaining input image — 540

Obtaining a designation of one the style image — 550

Performing style transfer — 560

Obtaining user inputs — 562

Modifying transforms — 564

Applying transforms — 566

Rendering output image — 568

500

Figure 5

Input of
$h_0^b(\cdot)$

380

Conv.
3x3x3

$h_0^b(\cdot)$

Figure 7A

382

Input of
$h_1^b(\cdot)$

Conv.
3x3x16

ReLU

Upsamp
2x2

380

Conv.
3x3x3

$h_1^b(\cdot)$

Figure 7B

384

382

Input of
$h_2^b(\cdot)$

Conv.
3x3x32

ReLU

Upsamp
2x2

Conv.
3x3x16

ReLU

Upsamp
2x2

380

Conv.
3x3x3

$h_2^b(\cdot)$

Figure 7C

386

384

382

Input of
$h_3^b(\cdot)$

Conv.
3x3x64

ReLU

Upsamp
2x2

Conv.
3x3x32

ReLU

Upsamp
2x2

Conv.
3x3x16

ReLU

Upsamp
2x2

380

Conv.
3x3x3

$h_3^b(\cdot)$

Figure 7D

EP 3 540 695 A1

Input of
$h_0^b(\cdot)$

380

800

| Conv. 3x3x3 | Filter | $\rightarrow h_0^b(\cdot)$ |

Figure 8A

382

Input of
$h_1^b(\cdot)$

380

800

| Conv. 3x3x16 | ReLU | Upsamp 2x2 | Conv. 3x3x3 | Filter | $\rightarrow h_1^b(\cdot)$ |

Figure 8B

384

382

Input of
$h_2^b(\cdot)$

380

800

| Conv. 3x3x32 | ReLU | Upsamp 2x2 | Conv. 3x3x16 | ReLU | Upsamp 2x2 | Conv. 3x3x3 | Filter | $\rightarrow h_2^b(\cdot)$ |

Figure 8C

386

384

382

Input of
$h_3^b(\cdot)$

380

800

| Conv. 3x3x64 | ReLU | Upsamp 2x2 | Conv. 3x3x32 | ReLU | Upsamp 2x2 | Conv. 3x3x16 | ReLU | Upsamp 2x2 | Conv. 3x3x3 | Filter | $\rightarrow h_3^b(\cdot)$ |

Figure 8D

Europäisches
Patentamt

European
Patent Office

Office européen
des brevets

**EUROPEAN SEARCH REPORT**

Application Number

EP 18 30 5264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Yijun Li ET AL: "A Closed-form Solution to Photorealistic Image Stylization", arXiv:1802.06474v3, 22 February 2018 (2018-02-22), pages 1-12, XP055506685, arXiv Retrieved from the Internet: URL:https://arxiv.org/pdf/1802.06474v3.pdf [retrieved on 2018-09-12] * abstract; figures 1-3 * * page 2, column 1 * | 1-15 | INV. G06T11/00 G06T11/60 |
| X | DONGDONG CHEN ET AL: "StyleBank: An Explicit Representation for Neural Image Style Transfer", ARXIV.ORG, CORNELL UNIVERSITY LIBRARY, 201 OLIN LIBRARY CORNELL UNIVERSITY ITHACA, NY 14853, 27 March 2017 (2017-03-27), XP080755790, DOI: 10.1109/CVPR.2017.296 * abstract; figures 1,2 * | 1-15 | |
| | | | TECHNICAL FIELDS SEARCHED (IPC) |
| X | US 2018/068463 A1 (RISSER ERIC ANDREW [US]) 8 March 2018 (2018-03-08) * abstract; figures 5-11 * * paragraphs [0002] - [0004], [0058] * | 1-15 | G06T |

-/--

The present search report has been drawn up for all claims

| Place of search | Date of completion of the search | Examiner |
|---|---|---|
| Munich | 12 September 2018 | Meinl, Wolfgang |

EPO FORM 1503 03.82 (P04C01)

page 1 of 2

| Europäisches Patentamt European Patent Office Office européen des brevets | **EUROPEAN SEARCH REPORT** | Application Number EP 18 30 5264 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Leon A Gatys ET AL: "Image Style Transfer Using Convolutional Neural Networks", , June 2016 (2016-06), pages 1-10, XP055298103, DOI: 10.1109/CVPR.2016.265 Retrieved from the Internet: URL:http://www.cv-foundation.org/openaccess/content_cvpr_2016/papers/Gatys_Image_Style_Transfer_CVPR_2016_paper.pdf [retrieved on 2016-08-29] * the whole document * | 1-15 | |
| L | GILLES PUY ET AL: "A Flexible Convolutional Solver with Application to Photorealistic Style Transfer", ARXIV.ORG, CORNELL UNIVERSITY LIBRARY, 201 OLIN LIBRARY CORNELL UNIVERSITY ITHACA, NY 14853, 14 June 2018 (2018-06-14), XP080890489, * abstract * * pages 1,2,11 * | 1-15 | |
| | | | TECHNICAL FIELDS SEARCHED (IPC) |

The present search report has been drawn up for all claims

| Place of search | Date of completion of the search | Examiner |
|---|---|---|
| Munich | 12 September 2018 | Meinl, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5264

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2018

| Patent document cited in search report | Publication date | Patent family member(s) | Publication date |
|---|---|---|---|
| US 2018068463 A1 | 08-03-2018 | US 2018068463 A1<br>US 2018144509 A1<br>WO 2018042388 A1 | 08-03-2018<br>24-05-2018<br>08-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GATYS L. ; ECKER A. ; BETHGE M.** Image style transfer using convolutional neural networks. *CVPR,* 2016

- the matting Laplacian. **LEVIN, LISCHINSKI ; WEISS.** A Closed-Form Solution to Natural Image Matting. IEEE PAMI, 2008, vol. 30, 228-242